Europäisches Patentamt

(19) European Patent Office

Office européen des brevets

(11) Numéro de publication: **0 111 980
B1**

(12) **FASCICULE DE BREVET EUROPEEN**

(45) Date de publication du fascicule du brevet:
16.09.87

(21) Numéro de dépôt: **83201797.4**

(22) Date de dépôt: **15.12.83**

(51) Int. Cl.⁴: **H 04 N 5/18**

(54) **Procédé et dispositif pour aligner le niveau de noir d'un signal vidéofréquence.**

(30) Priorité: **22.12.82 FR 8221565**

(43) Date de publication de la demande:
**27.06.84 Bulletin 84/26**

(45) Mention de la délivrance du brevet:
**16.09.87 Bulletin 87/38**

(84) Etats contractants désignés:
**DE FR GB**

(56) Documents cités:
**US - A - 3 246 080**

(73) Titulaire: **S.A. La Radiotechnique Industrielle et
Commerciale, 51 Rue Carnot, F-92150 Suresnes (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB**

(72) Inventeur: **Chameroy, Pascal, Société Civile
S.P.I.D. 209 rue de l'Université, F-75007 Paris (FR)**
Inventeur: **Decraemer, Alain, Société Civile
S.P.I.D. 209 rue de l'Université, F-75007 Paris (FR)**

(74) Mandataire: **Caron, Jean et al, SOCIETE CIVILE
S.P.I.D. 209, rue de l'Université, F-75007 Paris (FR)**

## Description

L'invention concerne un procédé pour aligner le niveau de noir d'un signal vidéofréquence, notamment de télévision, signal transmis par un condensateur, selon lequel on relie un conducteur, conduisant ce signal, à une source de tension pendant une fraction de la durée d'une ligne de balayage d'image.

Elle concerne également un dispositif pour aligner le niveau du noir d'un signal vidéofréquence, notamment dans un appareil de réception d'images.

Des circuits pouvant délivrer les signaux vidéofréquence avec un niveau de polarisation continu dérivant peu avec la température, fiables dans le temps, et peu sensibles aux variations de tension d'alimentation, sont coûteux et complexes. Ainsi a-t-on depuis longtemps choisi de transmettre le signal vidéo sans sa polarisation continue, et de la restituer ensuite. Un circuit pour restituer cette polarisation c'est-à-dire «aligner le niveau du noir» est connu par l'ouvrage «guide de la télévision en couleurs» aux éditions CHIRON (PARIS), page 120 et en particulier figure IV.10.

Ce circuit est muni d'une source de tension constituée par un ensemble de diodes dont certaines délivrent un courant dans un sens, et d'autres délivrent un courant dans l'autre sens. Cet ensemble est commandable par des signaux appliqués à certaines des diodes, et est relié à une connexion véhiculant le signal vidéofréquence.

Cet ensemble de diodes constitue un interrupteur pour relier ladite connexion à une source de tension à savoir la masse, pendant une fraction de la durée d'une ligne de balayage d'image.

Malheureusement le palier de tension du signal lors des retours de ligne est interrompu par une impulsion de synchronisation à un niveau différent de celui du palier et qui perturbe l'alignement du niveau du noir, c'est-à-dire du palier. C'est pourquoi on est obligé de commander les diodes uniquement pendant un temps bien délimité en dehors de l'impulsion de synchronisation. Pour ce faire, l'ouvrage cité enseigne d'utiliser un signal de référence de couleur situé après l'impulsion de synchronisation. Malheureusement un tel signal n'existe pas dans les téléviseurs noir et blanc. Dans ce cas il faut engendrer un signal adéquat, par exemple en combinant logiquement un signal de retour de ligne et l'impulsion de synchronisation. Ceci nécessite l'emploi de circuits spécifiques et surtout de connexions supplémentaires pour prélever les signaux ad hoc en différents points de l'appareil.

L'invention a pour objet de fournir le moyen d'aligner le niveau du noir sans écrêter l'impulsion de synchronisation et en utilisant seulement, comme signal de commande un signal de retour de ligne, signal qui est disponible dans tous les récepteurs d'images.

Elle est basée sur l'idée d'introduire une constante de temps différente selon que le signal vidéofréquence est trop haut ou trop bas par rapport à son niveau idéal, et de constituer cette constante de temps au moyen d'un condensateur de liaison du signal vidéofréquence, associé à l'impédance interne de la source de tension.

Un procédé selon l'invention est ainsi notamment remarquable en ce qu'on relie ledit conducteur à ladite source de tension pendant toute la durée d'un retour de ligne, et en ce qu'on utilise une source de tension dont l'impédance interne varie selon le sens du courant qu'elle fournit.

Un dispositif selon l'invention, muni d'une source de tension commandable reliée à un conducteur qui véhicule ledit signal, source de tension constituée d'une première partie délivrant un courant dans un premier sens, et d'une seconde partie délivrant un courant dans un second sens, est notamment remarquable en ce qu'une des deux parties a une impédance interne faible alors que l'autre partie a une impédance interne significativement plus élevée, et en ce qu'un circuit de commande commun active simultanément les deux parties pendant toute la durée d'un retour de ligne.

Dans une variante avantageuse, un dispositif selon l'invention situé dans un appareil récepteur d'images comportant un circuit de commande de balayage pouvant délivrer sur une borne un signal de retour de ligne, dispositif muni d'un interrupteur pour relier un conducteur, qui véhicule ledit signal vidéofréquence, à une source de tension, est également remarquable en ce que ladite source de tension comporte une partie à basse impédance pouvant délivrer en permanence du courant dans un seul sens, et une partie à impédance significativement plus élevée pouvant délivrer en permanence du courant dans un deuxième sens, et en ce qu'une connexion de commande de l'interrupteur est reliée à ladite borne du circuit de commande de balayage.

La description qui va suivre, en regard des dessins annexés décrivant des exemples non limitatifs, fera bien comprendre comment l'invention peut être réalisée:

Les fig. 1 et 2 représentent les schémas de deux exemples de dispositifs selon l'invention.

La fig. 3 représente l'allure d'un signal vidéofréquence.

La description qui va suivre se rapporte à un signal vidéofréquence à modulation positive, c'est-à-dire dont la tension maximale représente le niveau du blanc, et dont les impulsions de synchronisation sont négatives par rapport au palier du noir. Il va de soi que le circuit peut être adapté facilement à une modulation négative en changeant la polarité ou le sens des éléments, sans sortir du cadre de l'invention.

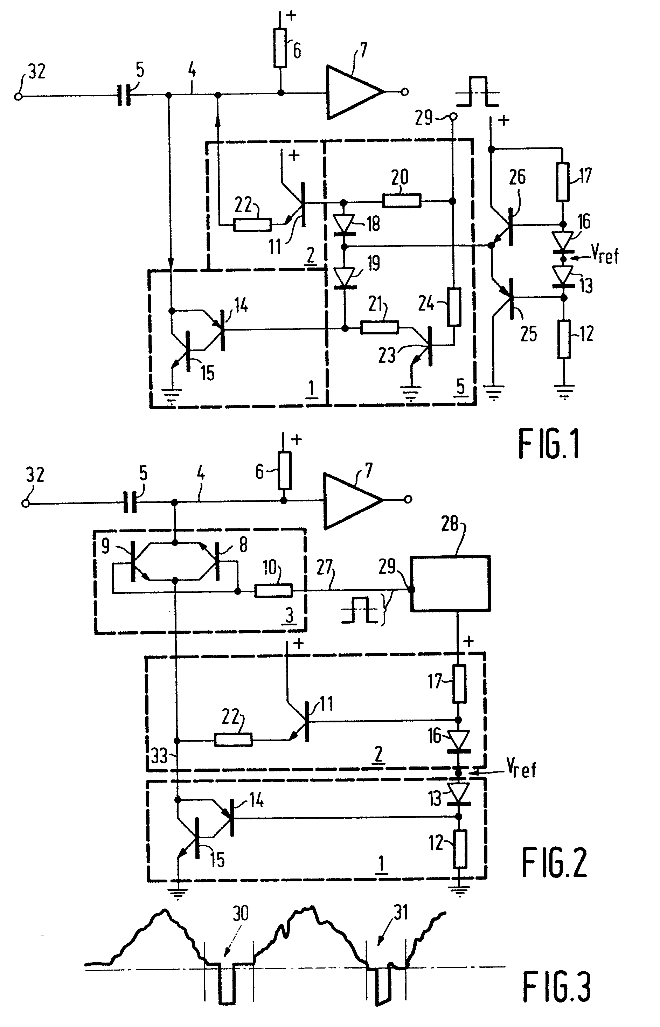

La figure 1 illustre un circuit permettant de mettre en œuvre le procédé de l'invention. Le signal vidéofréquence (représenté sur la figure 3) est amené sur une borne 32, et transmis au conducteur 4 et à l'amplificateur 7 par un condensateur de liaison 5. Le conducteur 4 conduisant le signal vidéofréquence est relié à une source de tension de référence pendant une fraction de la durée d'une ligne de balayage d'image. Cette source de tension de référence est constituée ici par le point milieu entre les diodes 13 et 16. Cette tension est déterminée par le pont diviseur constitué entre l'alimentation positive et la masse, par la résistance 17, les diodes 16 et 13 et la résistance 12 en série. Les transistors 25 et 26 montés selon le montage connu dit push-pull complémentaire, permet de fournir la tension de référence sur le point commun des émetteurs des transistors 25 et 26 et de délivrer un courant important dans n'importe quel sens. Le conducteur 4 peut être relié à la tension de référence par l'espace émetteur-base du transistor 14, la diode 19, l'espace émetteur-base du transistor 26 et la diode 16. Dans cette série d'éléments il y a deux diodes dans un sens et deux diodes dans le sens opposé, dont les chutes de tension se compensent à peu près, ce qui fournit bien la tension de référence sur le conducteur 4. De la même façon ce conducteur 4 peut être relié aussi à la tension de référence par la résistance 22, l'espace émetteur-base du transistor 11, la diode 18, l'espace émetteur base du transistor 25 et la diode 13. Du fait de la résistance 22, du courant est fourni par le transistor 11 au conducteur 4 sous une impédance plus élevée que celui fourni par les transistors 14, 15 dans l'autre sens.

La source de tension constituée globalement par l'ensemble des éléments 11 à 14, 16 à 19, 22, 25, 26 a donc une impédance interne qui varie selon le sens du courant qu'elle fournit. Cette source n'est active que lorsqu'on applique à une borne 29 une impulsion de retour de ligne, qui rend conducteur les transistors 11 et 23, reliant ainsi le conducteur 4 à la source de tension de référence $V_{ref}$ pendant toute la durée d'un retour de ligne.

L'ensemble des éléments 11 à 26 constitue une source de tension commandable reliée au conducteur 4 qui véhicule le signal vidéofréquence. Cette source de tension comporte une première partie 1, constituée des transistors 14 et 15 branchés selon un montage dit «Darlington» à transistors complémentaires, équivalent à un transistor PNP et délivrant un courant dans un premier sens, allant du conducteur 4 vers la masse, et une seconde partie 2 constituée de la résistance 22 en série dans l'émetteur du transistor NPN 11 dont le collecteur est relié à l'alimentation positive, seconde partie qui fournit un courant dans l'autre sens, allant de l'alimentation positive vers le conducteur 4. La partie 1 a une impédance interne faible, notamment grâce au montage Darlington qui augmente le courant susceptible d'être conduit vers la masse. L'autre partie 2 a une impédance interne significativement plus élevée par suite de la résistance 22 insérée en série dans le circuit. L'ensemble des éléments 18 à 21, 23, 24 constitue un circuit 5 de commande, commun aux parties 1 et 2, et qui les active simultanément pendant toute la durée d'un retour de ligne. La borne 29 est reliée via une résistance 24 à la base d'un transistor 23 dont l'émetteur est relié à la masse. Le collecteur du transistor 23 est relié via la résistance 21 à la base de l'ensemble Darlington 14, 15 et à la cathode de la diode 19. La borne 29 est aussi reliée à la base du transistor 11 et à l'anode de la diode 18, via une résistance 20. La cathode de la diode 18 est reliée à l'anode de la diode 19 et au point commun des émetteurs des transistors 25, 26 qui constituent une source de tension de référence à basse impédance.

La tension appliquée à la borne 29 évolue ici entre zéro volt pendant l'aller d'une ligne de balayage et 4 à 5 volts pendant toute la durée du retour de balayage. Pendant que la borne 29 est à zéro volt, le transistor 23 est bloqué, aucun courant ne passe dans la résistance 21, et la diode 19 en opposition avec la jonction de base du transistor 14 bloque ce dernier. Comme on le verra plus loin la tension sur le conducteur 4 évolue entre 2 et 5,5 volts, donc le transistor 11 est également bloqué lorsque sa base est à zéro volts. Les transistors 14, 15 et 11 étant tous bloqués la tension sur le conducteur 4 peut évoluer librement. Pendant tout le retour de ligne, la tension sur la borne 29 passe à 5 volts. Alors le transistor 23 est conducteur et puise un courant à l'émetteur du transistor 26, via la diode 19 et la résistance 21. La tension sur la cathode de la diode 19 est égale à la tension de référence moins la tension aux bornes de la diode. Le transistor 23 puise aussi du courant sur la base de l'ensemble Darlington 14, 15 qui est donc conducteur. Sa tension d'émetteur est au plus égale à la tension sur la cathode de la diode 19 plus la tension base-émetteur, soit finalement à peu près la tension de référence. Le transistor 11 est également conducteur, sa base étant reliée à la tension de 5 volts par la résistance 20. Mais sa tension de base est égale à la tension de référence plus la tension aux bornes de la diode 18. Sa tension d'émetteur est donc au moins égale à la tension d'anode de la diode 18 moins sa propre tension base-émetteur, soit finalement, là aussi, à peu près la tension de référence.

Le signal vidéofréquence appliqué au conducteur 4 est représenté par la figure 3. Il a une amplitude crête à crête d'environ 3,5 volts, dont à peu près 1 volt pour l'impulsion de synchronisation, et 2,5 volts pour le signal vidéo proprement dit. Le conducteur 4 de la figure 1 est relié à l'alimentation positive par une résistance élevée 6. De ce fait, la valeur moyenne du signal sur le conducteur 4 a tendance à augmenter car le condensateur 5 se charge, via la résistance 6. C'est ainsi que lors d'un retour de ligne 30 où on a supposé qu'il n'y avait pas action du dispositif d'alignement, la tension du palier (niveau du noir) est supérieure à la tension de référence de 3 volts indiquée par une ligne en tirets.

Ainsi la valeur moyenne de l'ensemble du signal monte et au bout d'un certain temps elle atteindra pratiquement la tension d'alimentation positive. Lors du retour de ligne 31 où on a mis en action le dispositif selon l'invention, au début du retour de ligne où la tension est trop élevée, celle-ci est rapidement ramenée à la tension de référence par les transistors 14, 15 dont, ainsi qu'il a été expliqué ci-dessus, la tension d'émetteur est au plus égale, à peu près, à la tension de référence. Lors de l'apparition de l'impulsion de synchronisation, la tension descend bien en dessous de la tension de référence. L'émetteur du transistor 11 a une tension au moins égale à la tension de référence, mais la résistance 22 limite le courant et le condensateur 5 ne peut se charger vite. Le fond de l'impulsion n'a donc qu'une légère pente positive et la tension n'a pas beaucoup monté lorsqu'arrive la fin de l'impulsion. Cette légère remontée a relevé le signal, mais dès le début du palier de noir qui suit l'impulsion, la tension est comme précédemment ramenée très vite au niveau de référence par les transistors 14, 15 et on observe seulement une petite pointe positive de très courte durée. Le palier du noir étant donc aligné sur la tension de référence de 3 volts, le fond des impulsions est à environ 2 volts et le niveau de blanc est à environ 5,5 volts.

La figure 2 dans laquelle les éléments équivalents sont indiqués par les mêmes références que sur la figure 1 représente une variante avantageuse par sa simplicité. Au lieu d'une source de courant commandée à chaque retour de ligne, une source capable de débiter en permanence est utilisée mais un interrupteur 3 est placé en série avec elle. Le récepteur d'images comporte un circuit de commande de balayage 28 pouvant délivrer sur une borne 29 un signal de retour de ligne, et il est muni d'un interrupteur 3 pour relier le conducteur 4 qui véhicule le signal vidéofréquence, à une source de tension constituée par les deux parties référencées 1 et 2. La partie 1 est à basse impédance et peut délivrer en permanence du courant allant du conducteur 4 vers la masse.

La partie 2 a une impédance significativement plus élevée par suite de l'insertion d'une résistance 22 en série, et peut délivrer en permanence du courant allant de l'alimentation positive vers le conducteur 4. Le schéma des sources de tension est semblable à celui de la figure 2 dans lequel les éléments de commande de blocage 18, 19, 20, 21, 23, 24, 25, 26 ont été supprimés. Les bases des transistors 11 et 14 sont maintenant réunies directement respectivement à l'anode de la diode 16 et à la cathode de la diode 13 et les sources peuvent débiter en permanence. Par contre un interrupteur 3 est inséré entre la connexion de sortie 33 commune aux deux parties 1 et 2 de la source de tension et le conducteur 4. Cet interrupteur est constitué par deux transistors 8 et 9 tous deux NPN, l'émetteur du transistor 8 et le collecteur du transistor 9 étant reliés au conducteur 4, l'émetteur du transistor 9 et le collecteur du transistor 8 étant reliés à la connexion 33. Les bases de ces deux transistors sont reliées ensemble, via une résistance 10, à une connexion 27 de commande de l'interrupteur, laquelle est reliée à la borne 29 du circuit 28 de commande de balayage. Sur cette borne 29 est fourni le même signal de retour de ligne que sur la borne 29 de la figure 1. Pendant l'aller d'une ligne, la borne 29 est portée à zéro volt, le conducteur 4 est porté à une tension vidéo comprise entre 3 et 5,5 volts et la connexion 33 est maintenue toujours à 3 volts, tension de référence. Les deux transistors 8 et 9 sont donc bloqués. Pendant un retour de ligne, la borne 29 est portée à 5 volts, le conducteur 4 est porté à une tension de palier ou d'impulsion à peu près comprise entre 2 et 3 volts, et la connexion 33 est toujours maintenue à 3 volts. Les deux transistors 8 et 9 sont donc conducteurs et relient le conducteur 4 à la source de tension 1, 2, qui fonctionne comme dans le cas de la figure 1. Le niveau du noir est un peu moins précis qu'avec le dispositif de la figure 1 car des chutes de tension dues à la tension de saturation non nulle des transistors 8, 9 s'ajoutent à la tension de référence, mais par contre le circuit est plus simple.

La résistance 6 pourrait être ramenée à la masse. Mais alors la tension moyenne aurait tendance à baisser et le palier avant l'impulsion de synchronisation serait aligné par la partie de la source de tension à impédance interne élevée; cet alignement serait donc moins efficace. Il est donc utile qu'une source de courant, constituée ici par la résistance 6 reliée à l'alimentation positive, soit connectée en permanence au conducteur 4 pour lui fournir un courant dans le même sens que la partie 2 à impédance élevée de la source de tension.

D'autres variantes peuvent être imaginées sans sortir du cadre de l'invention. Par exemple les deux transistors 8 et 9 de l'interrupteur 3 peuvent avantageusement être remplacés par un unique transistor à effet de champ, dans la mesure ou une technologie disponible permet de l'intégrer avec le reste du circuit.

Les transistors 14, 15 peuvent être remplacés par un seul transistor PNP.

Les sources de tension 1, 2 peuvent être réalisées de diverses manières connues de l'homme du métier, pourvu que la source qui tend à aligner le fond de l'impulsion de synchronisation soit à impédance plus élevée que l'autre.

Revendications

1. Procédé pour aligner le niveau de noir d'un signal vidéofréquence, notamment de télévision, signal transmis par un condensateur, selon lequel on relie un conducteur conduisant ce signal à une source de tension pendant une fraction de la durée d'une ligne de balayage d'image, caractérisé en ce qu'on relie ledit conducteur à ladite source de tension pendant toute la durée d'un retour de ligne et en ce qu'on utilise une source de tension dont l'impédance interne varie selon le sens du courant qu'elle fournit.

2. Dispositif pour mettre en œuvre le procédé de la revendication 1 afin d'aligner le niveau du noir d'un signal vidéofréquence, notamment de télévision, signal transmis par un condensateur, le dispositif étant muni d'une source de tension commandable reliée à un conducteur (4) qui véhicule ledit signal, source de tension constituée d'une première partie (1) délivrant un courant dans un premier sens, et d'une seconde partie (2) délivrant un courant dans un second sens, caractérisé en ce qu'une des deux parties (1) a une impédance interne faible alors que l'autre partie (2) a une impédance interne significativement plus élevée, et en ce qu'une circuit de commande (5) commun active simultanément les deux parties pendant toute la durée d'un retour de ligne.

3. Dispositif pour mettre en œuvre le procédé de la revendication 1 afin d'aligner le niveau du noir d'un signal vidéofréquence transmis par un condensateur dans un appareil récepteur d'images comportant un circuit de commande de balayage (28) pouvant délivrer sur une borne (29) un signal correspondant à la durée complète d'un retour de ligne, dispositif muni d'un interrupteur (3) pour relier un conducteur (4), qui véhicule ledit signal vidéofréquence, à une source de tension (1, 2) caractérisé en ce que ladite source de tension comporte une partie (1) à basse impédance pouvant délivrer en permanence du courant dans un seul sens, et une partie (2) à impédance significativement plus élevée pouvant délivrer en permanence du courant dans un deuxième sens, et en ce qu'une connexion (27) de commande de l'interrupteur (3) est reliée à ladite borne (29) du circuit de commande de balayage (28).

4. Dispositif selon l'une des revendication 2 ou 3, caractérisé en ce qu'une source de courant est connectée en permanence au conducteur (4) qui véhicule le signal vidéofréquence pour lui fournir un courant dans le même sens que la partie à impédance élevée de la susdite source de tension.

**Patentansprüche**

1. Verfahren zur Schwarzpegelregelung eines Video-Frequenzsignals, insbesondere eines Fernsehsignals, das durch einen Kondensator übertragen wird, wobei nach diesem Verfahren ein dieses Signal führender Leiter während eines Teils der Dauer einer Bildzeile mit einer Spannungsquelle verbunden wird, dadurch gekennzeichnet, dass der genannte Leiter während der ganzen Dauer eines Zeilenrücklaufes mit der genannten Spannungsquelle verbunden wird und dass eine Spannungsquelle verwendet wird, deren innere Impedanz abhängig von der Richtung des von ihr gelieferten Stromes variiert.

2. Schaltungsanordnung zum Durchführen des Verfahrens nach Anspruch 1 zur Schwarzpegelregelung eines Video-Frequenzsignals, insbesondere eines Fernsehsignals, das durch einen Kondensator übertragen wird, wobei die Schaltungsanordnung mit einer steuerbaren Spannungsquelle versehen ist, die mit einem das genannte Signal übertragenden Leiter (4) verbunden ist, wobei die Spannungsquelle durch einen ersten Teil (1) gebildet wird, der einen Strom in einer ersten Richtung liefert, und durch einen zweiten Teil (2), der einen Strom in einer zweiten Richtung liefert, dadurch gekennzeichnet, dass einer der zwei Teile (1) eine niedrige innere Impedanz hat, während der andere Teil (2) eine wesentlich höhere innere Impedanz hat und dass eine gemeinsame Steuerschaltung (5) die zwei Teile während der ganzen Dauer eines Zeilenrücklaufes aktiviert.

3. Schaltungsanordnung zum Durchführen des Verfahrens nach Anspruch 1 zur Schwarzpegelregelung eines Video-Frequenzsignals, das durch einen Kondensator in einem Bildempfangsgerät übertragen wird, mit einer Abtaststeuerschaltung (28), die an einem Anschluss (29) ein Signal entsprechend der ganzen Zeilenrücklaufzeit liefern kann, wobei die Schaltungsanordnung zum Verbinden eines das genannte Video-Frequenzsignal übertragenden Leiters (4) mit einer Spannungsquelle (1, 2) mit einem Schalter (3) versehen ist, dadurch gekennzeichnet, dass die genannte Spannungsquelle einen Teil (1) mit niedriger Impedanz aufweist, der ständig Strom in nur einer Richtung liefern kann, sowie einen Teil (2) mit einer wesentlich höheren Impedanz, der ständig Strom in einer zweiten Richtung liefern kann und dass mit dem genannten Anschluss (29) der Abtaststeuerschaltung (28) eine Steuerverbindung (27) des Schalters (3) verbunden ist.

4. Schaltungsanordnung nach einem der Ansprüche 2 oder 3, dadurch gekennzeichnet, dass mit dem das Video-Frequenzsignal übertragenden Leiter (4) ständig eine Stromquelle verbunden ist zum demselben Liefern eines Stromes in derselben Richtung wie der Teil mit der höheren Impedanz der genannten Spannungsquelle.

**Claims**

1. A method of adjusting the black level of a video signal, more specifically a television signal, which signal is transferred by a capacitor, whereby a conductor conducting the signal is connected to a voltage source for a fraction of the duration of a line scanning characterized in that said conductor is connected to said voltage source during the entire duration of a line fly-back and that a voltage source is used whose internal impedance varies in dependence on the direction of the current it produces.

2. A device for putting the method as claimed in Claim 1 into effect so as to adjust the black level of a video signal more specifically a television signal, which signal is transferred by a capacitor, the device including a controllable voltage source connected to a conductor (4) conducting said signal, the voltage source being formed by a first part (1) supplying a current in a first direction and by a second part (2) supplying a current in a second direction, characterized in that one of the two parts (1) has a weak internal impedance while the other part (2) has a significantly higher internal impedance, and that a common control circuit (5) simultaneously activates the two parts during the entire duration of a line fly-back.

3. A device for putting the method as claimed in Claim 1 into effect so as to adjust the black level of a video signal transferred by a capacitor in a picture receiver comprising a scanning control circuit (28) capable of applying a signal corresponding to the entire duration of a line fly-back to a terminal (29), the device including a switch (3) for connecting a conductor (4), carrying said video signal, to a voltage source (1, 2), characterized in that said voltage source has a low-impedance part (1) capable of continuously supplying current in one single direction, and a part (2) of a significantly higher impedance capable of supplying current continuously in a second direction, and that an interrupter switch control connection (27) is connected to said terminal (29) of the scanning control circuit (28).

4. A device as claimed in one of the Claims 2 or 3, characterized in that a current source is permanently connected to the conductor (4) conducting the video signal in order to supply it with a current in the same direction as the high-impedance part of the above-mentioned voltage source.

0 111 980

FIG.1

FIG.2

FIG.3